Europäisches Patentamt

**European Patent Office** (11) Numéro de publication: **0 059 294**
**B1**

Office européen des brevets

(12) **FASCICULE DE BREVET EUROPEEN**

(19)

(12)

(45) Date de publication du fascicule du brevet:     (51) Int. Cl.³: **H 04 B 1/66**
**21.11.84**

(21) Numéro de dépôt: **81430004.2**

(22) Date de dépôt: **27.02.81**

(54) **Perfectionnement aux procédés de transmission et dispositif de mise en oeuvre du procédé perfectionné.**

(43) Date de publication de la demande:
**08.09.82 Bulletin 82/36**

(45) Mention de la délivrance du brevet:
**21.11.84 Bulletin 84/47**

(84) Etats contractants désignés:
**DE FR GB**

(56) Documents cités:
**FR - A - 2 389 277**
**US - A - 3 750 024**

(73) Titulaire: **International Business Machines Corporation,
Old Orchard Road, Armonk, N.Y. 10504 (US)**
(84) Etats contractants désignés: **DE GB**

(73) Titulaire: **Compagnie IBM FRANCE, 5 Place Vendôme,
F-75000 Paris 1er (FR)**
(84) Etats contractants désignés: **FR**

(72) Inventeur: **Beraud, Jean-Paul, 239, Avenue des Filagnes,
F-06700 Saint Laurent du Var (FR)**
Inventeur: **Galand, Claude, 56, Avenue des Tuillères,
F-06800 Cagnes-sur-Mer (FR)**

(74) Mandataire: **Tubiana, Max, Compagnie IBM France
Département de Propriété Industrielle, F-06610 La
Gaude (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention traite de techniques de communications numériques et notamment de techniques de codage d'un signal vocal destiné à être transmis en duplex.

La traduction en numérique (codage) d'un signal variant dans le temps se fait par prélèvement d'échantillons et quantification desdits échantillons. Ceci suppose le découpage préalable en tranches de l'échelle de mesure des amplitudes du signal, et l'attribution d'une valeur numérique unique à chacune desdites tranches. Lors de l'opération de quantification, c'est-à-dire de conversion des échantillons du signal en valeurs numériques, tous les échantillons du signal dont l'amplitude se situe dans les limites d'une même tranche sont codés avec la même valeur numérique. Il en résulte naturellement une transcription infidèle se traduisant par une erreur entre le signal d'origine et son expression codée. On dit alors que les opérations réalisées engendrent un bruit de quantification. Il est évident qu'un affinement des tranches contribue à une réduction dudit bruit. Mais cela suppose, pour des limites de variation d'amplitude données de l'échelle de mesure, une augmentation du nombre de tranches, donc du nombre de valeurs numériques permettant de coder lesdites tranches, et par voie de conséquence, du nombre de bits à utiliser pour définir numériquement les tranches. Il en résulte une complication des dispositifs destinés à traiter ultérieurement le signal exprimé numériquement, et aussi, lorsque le signal doit être transmis d'un poste d'émission à un poste de réception, un encombrement des canaux de transmission du signal. On a donc cherché à réduire le taux de bits nécessaires au codage, tout en assurant l'obtention d'un rapport signal sur bruit convenable. Ou inversement, une fois défini le taux de bits global alloué à la quantification, on a cherché à en assurer une utilisation rationnelle permettant de minimiser le bruit.

Ces recherches sont à l'origine de procédés de codage dits différentiels ou delta PCM dans lesquels les bits de quantification sont utilisés au codage des incréments du signal entre deux instants d'échantillonnage consécutifs et non à la totalité de l'amplitude de chaque échantillon. La dynamique de l'information à quantifier étant alors plus réduite, il en résulte une meilleure utilisation des bits de quantification par découpage de l'échelle de mesure en tranches plus fines qu'elles ne l'auraient été si on avait utilisé le même nombre de bits pour coder directement les échantillons du signal tel que fourni initialement.

Ces procédés ont par la suite eux-mêmes été perfectionnés en tenant compte des caractéristiques statistiques du signal à coder. Par exemple, constatant que l'énergie des signaux d'origine vocale se concentre généralement dans les zones de fréquences basses du spectre de la voix, on a proposé d'accorder plus de bits, à la quantification de ces zones, donc de coder les signaux qui s'y trouvent avec plus de précision que ceux situés dans les bandes hautes. On peut citer à titre d'exemple de réalisation de ce type, la réalisation décrite par Crochiere et al dans un article publié dans le Bell System Technical Journal d'octobre 1976. Le signal vocal y est tout d'abord filtré par un banc de filtres passe-bande adjacents couvrant toute la gamme téléphonique. Les signaux résultants, sont ramenés en bande de base par modulation et échantillonés à leur fréquence de Nyquist. Puis chaque signal (ou sous-bande) est quantifié(e) séparément, de manière non uniforme, c'est-à-dire en allouant plus de bits aux bandes basses qu'aux bandes élevées. Une étude statistique permet de choisir différents taux de bits de quantification et de définir une répartition convenable desdits bits, entre les sous-bandes. Ce type de codage s'appuie cependant sur des données statistiques et non sur des situations réelles et donc n'offre pas un moyen de codage optimal.

Dans d'autres systèmes, les qualités du codage du signal ont été améliorées en ne basant plus léallocation de bits sur des résultats statistiques, mais sur des données réelles déterminées directement à partir des caractéristiques du signal.

Dans ce cas, pour éviter que le codeur ne devienne trop complexe et donc que le système de codage et décodage ne perde de son intérêt sur le plan pratique, il a fallu faire appel à des techniques telles que celle décrite dans le brevet français No. FR-A-2 389 277 délivré à la demanderesse sous le titre »Procédé de quantification à allocation dynamique du taux de bits disponibles, et dispositif de mise en œuvre dudit procédé«. Ce procédé est appliqué essentiellement au codage de type dit BCPCM où le signal est codé par tronçons pris dans le domaine du temps (K échantillons par tronçon). Le signal est en outre scindé en p sous-gammes (ou sous-bandes) dans le domaine des fréquences et chaque sous-gamme est codée séparément et selon ses propres caractéristiques. Plus précisément un certain nombre de paramètres de codage, et notamment le nombre de bits $n_i$ à allouer à la quantification du signal de la $i^{ième}$ sous-gamme, sont fixés pour K échantillons d'un bloc ou tronçon donné à partir des caractéristiques des mêmes desdits K échantillons. En d'autres termes, le procédé décrit dans le brevet français FR-A-2 389 277 permet une certaine optimisation de la répartition des ressources du système de codage et notamment une utilisation rationnelle et basée sur les caractéristiques du signal à coder, du taux de bits alloué à la quantification.

Toutefois, compte tenu du fait que la quantification proprement dite d'un tronçon de signal exige le calcul préalable de certains paramètres à partir des caractéristiques de ce même tronçon, il en résulte forcément des délais relativement importants entre entrée et sortie du signal dans les dispositifs codeur et décodeur. Cela peut être particulièrement gênant lorsque ces dispositifs appartiennent à un système de communication. En effet, dans les systèmes modernes, les communications se font en duplex total. Autrement dit, une voie émission et une voie réception sont simultanément opérationnelles. Tout devrait se passer, pour les interlocuteurs placés à chaque extrémité du système de communication, comme s'ils se trouvaient l'un en face de l'autre et conversaient en temps réel. Mais les informations véhiculées par les voies émission et réception interfèrent les unes sur les autres et un phénomène dit d'écho apparaît. En l'occurence, l'information émise par un locuteur lui revient au bout d'un certain temps.

Ce phénomène dit d'écho est particulièrement gênant pour le locuteur puisqu'il lui renvoie à l'oreille des informations prononcées par lui-même précédemment, et ce tout au long de la conversation avec son interlocuteur. Lorsque les délais entre émission d'un signal et réception d'un écho par rebouclage de la réception sur l'émission sont faibles, l'oreille humaine les accepte et le locuteur n'est pas perturbé. Au-delà d'un retard supérieur à une certaine limite ($\simeq 25$ ms), il devient impossible de converser valablement. Des solutions ont été proposées pour résoudre les problèmes engendrés par l'écho. Ces solutions sont en général de l'un des deux types suivants. Un premier type relativement simple et peu onéreux procède par coupure de la voie réception du locuteur ayant la parole. Il en résulte que l'on perd presque les avantages du duplex total (full duplex), avantages qui en font vraiment un système de type conversationnel. Le second type conserve les avantages du duplex total mais requiert l'utilisation de suppresseurs d'écho du genre égaliseurs adaptatifs qui sont complexes et onéreux.

Les problèmes d'écho que l'on vient d'évoquer sont encore plus cruciaux lorsque l'on utilise des systèmes de communication incorporant des codeurs/décodeurs basés sur les techniques de traitement du signal d'origine vocale, techniques utilisant les principes du brevet français précité.

En effet, bien que ces techniques permettent une optimisation du codage en adaptant de façon dynamique les ressources du codeur et notamment du quantificateur appartenant audit codeur, aux caractéristiques du signal à transmettre, il n'en demeure pas moins qu'elles augmentent les délais entre l'instant où une parole est émise et l'instant où elle est transmise et donc tout rebouclage de la voie émission sur la voie réception entraîne automatiquement un écho extrêmement gênant.

En effet, comme on l'a décrit dans le brevet précité, on y traite le signal par blocs de plusieurs échantillons à partir desquels on calcule dynamiquement des paramètres de quantification, par exemple nombre de bits de quantification qui seront eux-mêmes utilisés los du codage du bloc déchantillons d'où ces paramètres sont déduits. Cela entraîne un délai entre l'arrivée de ces échantillons à l'entrée du codeur et leur sortie du même codeur après quantification, delais nettement supérieurs à celui des codeurs plus classiques. D'où un risque certain d'écho gênant.

Compte tenu de la complexité du codeur utilisé dans le brevet français cité ci-dessus, la solution du suppresseur d'écho par égalisation est à éviter.

En effet, l'égaliseur lui-même devrait être encore plus complexe, donc plus onéreux, que celui que l'on utiliserait dans des systèmes de communication plus conventionnels.

La présente invention a donc pour objet un procédé permettant de réduire les effets de l'écho dans un système de communication en duplex total utilisant des techniques du type BCPCM.

La présente invention porte sur un procédé permettant de réduire les effets de l'écho dans un système de communication en duplex total utilisant les techniques de quantification dites à allocation dynamique du taux de quantification, techniques appliquées à un codage de type BCPCM, par quantification quasi instantanée de chaque bloc d'échantillons appliqués à l'entrée du codeur, grâce à l'introduction d'une avance apparente entre la détermination dynamique des paramètres de quantification à utiliser et l'apparition à l'entrée du codeur des échantillons à traiter à l'aide de ces mêmes paramètres.

Plus précisément ladite invention concerne un procédé de transmission d'un signal d'origine vocale dont le spectre s'étend sur une bande de fréquences donnée, ledit procédé comportant à l'émission les étapes suivantes:

échantillonnage dudit signal d'origine vocale;
codage en numérique à taux de bits relativement élevé du flot des échantillons ainsi obtenus;
filtrage du signal codé en numérique par répartition de la bande de fréquences donnée en p sous-bandes;
scission du flot d'échantillons du signal filtré et réparti entre p sous-bandes en blocs de durée donnée d'échantillons consécutifs;
requantification de chacun desdits blocs pris successivement, ladite requantification comportant une allocation dynamique du taux de bits alloués à la requantification du signal d'origine vocale de chacune desdites sous-bandes, et comportant pour le traitement de chacun des blocs à requantifier les opérations suivantes:

— détermination pour chaque sous-bande à partir de l'énergie du signal vocal compris dans ladite sous-bande et dérivant du filtrage et de la scission d'un bloc d'échantillons donné, de paramètres dits de requantification de ladite sous-bande;
— requantification des échantillons contenus dans chaque sous-bande et dérivant dudit bloc d'échantillons donné, à l'aide des paramètres de requantification, ladite requantification étant caractérisé en ce que:
la requantification des échantillons contenus dans chaque sous-bande et dérivant dudit bloc d'échantillons donné, est effectuée à l'aide des paramètres de requantification déterminés à partir du bloc d'échantillons précédent de la même sous-bande; et transmission par multiplexage des échantillons de signal requantifiés apparaissant sur les p sous-bandes, accompagnés, pour chaque bloc d'échantillons de paramètres de requantification.

D'autres détails, caractéristiques additionelles et avantage de la présente invention ressortiront mieux de l'exposé qui suit, fait en référence aux dessins annexés à ce texte, qui représentent un mode de réalisation préféré de celle-ci.

La figure 1 est un schéma d'un requantificateur utilisé dans la présente invention.

La figure 2 est un schéma de l'un des éléments du requantificateur de la figure 1.

La figure 3 est un schéma d'un dispositif de transmission numérique utilisant le requantificateur de la figure 1.

La figure 4 est un format d'un bloc de données à transmettre.

La figure 5 est un schéma d'un dispositif de transmission en duplex.

La figure 6 est un schéma d'un dispositif de transmission numérique selon l'invention.

La figure 7 est un schéma d'une variante du requantificateur de la figure 1.

La figure 8 est un format d'un bloc de données à transmettre.

Soit $S(nt)$ le signal échantillonné à coder. Supposons que son spectre soit scindé en p sous-bandes adjacentes que l'on quantifie séparément, mais de manière telle que le nombre de bits de quantification total par instant d'échantillonnage soit constant et égal à N. Dans un système de codage classique, toutes les sous-bandes sont quantifiées avec un nombre de bits constant, c'est-à-dire invariable au cours du temps. Il en résulte un certain bruit de quantification que l'on peut réduire si, au lieu de quantifier chaque sous-bande à l'aide d'un taux de bits constant, on distribue ceux-ci de manière un peu plus rationnelle.

On a défini, dans le brevet français précité, un procédé bien adapté au traitement de signaux d'origine vocale. Pour comprendre ce procédé, on supposera que l'on désigne par $n_i$ le nombre de bits utilisé pour quantifier le signal issu de $S(nt)$ et contenu dans la $i^{ième}$ sous-bande.

On désigne en outre par $E_i$ l'énergie dans cette même sous-bande, avant quantification. Le bruit de quantification introduit sur le canal i obéit, en première approximation, à la relation:

$$e_i \simeq E_i \cdot 2^{-2n_i}$$

L'erreur quadratique moyenne sur l'ensemble des p sous bandes est alors:

$$e = \sum_{i=1}^{p} E_i \cdot 2^{-2 n_i}$$

et l'on a en outre:

$$\sum_{i=1}^{p} n_i = N$$

On montre que l'erreur e est minimum lorsque tous les termes de la somme fournissant e sont égaux entre eux. Si l'on pose

$$E_i \cdot 2^{-2n_i} = k$$
où k est une constante et $i = 1, 2, 3, \ldots, p$.

Il en résulte:

$$n_i = -\log k^{1/2} + \log E_i^{1/2}$$
où log désigne le logarithme de base 2.

$$n_i = \sigma + \log E_i^{1/2}$$

avec

$$\sigma = -\log k^{1/2}$$

$$N = \sum_{i=1}^{p} n_i = p\,\sigma + \log \prod_{i=1}^{p} E_i^{1/2}$$

d'où

$$\sigma = \frac{N - \log \prod\limits_{i=1}^{p} E_i^{1/2}}{p}.$$

Le taux de bits à attribuer à la quantification de la $i^{ième}$ sous-bande, de manière à minimiser l'erreur globale de quantification sur l'ensemble des sous-bandes est donc:

$$n_i = \frac{N - \log \prod\limits_{j=1}^{p} E_j^{1/2}}{p} + \log E_i^{1/2}. \qquad (1)$$

Naturellement $n_i$ indiquant un nombre de bits, on ne conserve en fait du résultat de l'opération (1) qu'une valeur entière approchée. On dispose ainsi de moyens permettant de distribuer de manière rationnelle et dynamique les bits de quantification en partant de mesures des énergies contenues dans les différentes sous-bandes.

On doit, pour ce faire, après avoir scindé le signal en p sous-bandes, mesurer l'énergie contenue dans chacune desdites sous-bandes, en déduire, par application de la formule (1), la valeur du taux de bits à affecter à la quantification de chaque sous-bande, et utiliser cette valeur pour commander le fonctionnement du quantificateur.

Sur le plan pratique, les adjustements du quantificateur se feront pour un laps de temps donné, donc pour un bloc de plusieurs échantillons. Ce faisant, on peut déterminer les limites d'amplitude dans lesquelles le signal varie durant ce laps de temps. De la mesure de ces limites et du taux de bits alloué, on déduit la valeur du pas de quantification Q à choisir pour la quantification de la sous-bande considérée. A titre d'exemple, si l'on suppose que l'amplitude de la $i^{ième}$ sous-bande varie entre $-5$ volts et $+5$ volts et que le taux de bits qui lui est alloué est $n_i = 1$, on pourra convenir de prendre un pas $Q_i = 5$ volts. Ceci signifie que tous les échantillons supérieurs à zéro volt seront codés par un »0«, ceux inférieurs à zéro volt par un »1«.

Lorsque le découpage en sous-bandes, dans le domaine des fréquences est suffisamment fin, le spectre dans chaque canal est relativement plat. On admet alors que l'énergie dans chaque sous-bande est proportionnelle au carré de l'amplitude du plus grand (en valeur absolue) échantillon (M) qu'elle contient. D'où:

$$E_i = \lambda \cdot M_i^2 \qquad (2)$$

$\lambda$ étant un coefficient de proportionnalité, et

$M_i$ l'amplitude du plus grand échantillon de la $i^{ième}$ sous-bande.

En combinant les expressions (1) et (2) on obtient:

$$n_i = 1/p \left[ N - \log \prod_{j=1}^{p} M_j \right] + \log M_i \qquad (3)$$

$$= 1/p \left[ N - \sum_{j=1}^{p} \log M_j \right] + \log M_i$$

Si l'on veut utiliser des circuits numériques pour effectuer les opérations de quantification de l'invention, on est amené à traiter des signaux déjà codés. Ce codage préalable est effectué de façon classique avec un taux de bit élevé de manière à être précis, puis le dispositif de l'invention sert à une requantification des échantillons du signal tendant à réduire le taux de bit global utilisé sur l'ensemble des sous-bandes moyennant une répartition des bits disponibles de manière plus rationnelle. D'où le gros intérêt du système proposé puisqu'il permet une économie de bit. On parle alors de compression de données.

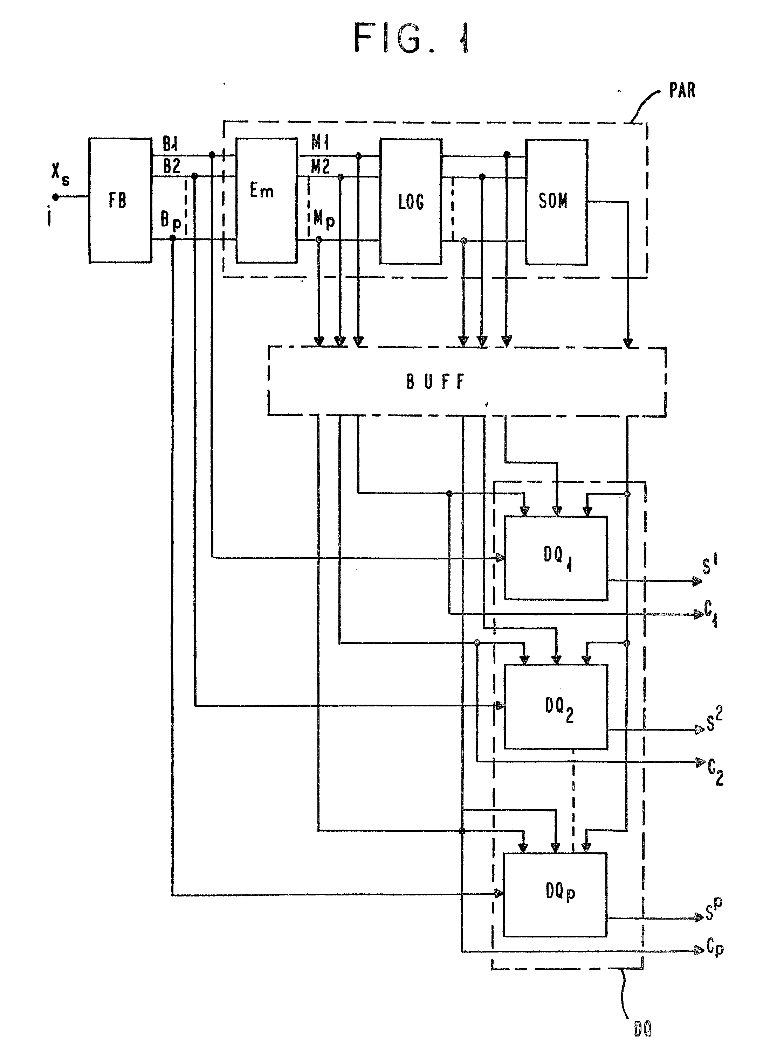

Le dispositif de la figure 1 permet la mise en œuvre du procédé de requantification décrit ci-dessus (on négligera, pour l'instant de mentionner le dispositif BUFF dont le rôle extrêment important pour l'application considérée sera indiqué ultérieurement). Le signal S(nt) une fois échantillonné et codé en MIC (dit aussi PCM) avec un taux de bits elevé fournit des échantillons $X_S$ qui sont transmis à un banc de filtres FB. Celui-ci répartit le signal entre p sous-bandes $B_i$ contenant des échantillons $X^i$ (avec i = 1, 2, ..., p). Un dispositif de mesure d'énergie Em, effectue sur chaque sous-bande, un tri des échantillons qu'il reçoit durant un laps de temps donné, (donc sur un tronçon de signal insérer un espace ou, en d'autres termes sur un bloc d'échantillons de durée donnée) de manière à déterminer le plus grand d'entre ces échantillons ($M_i$). Autrement dit, Em détermine les valeurs $M_i$ pour i = 1, 2, ..., p. Ces valeurs sont alors soumises à un générateur de logarithme LOG qui peut être une simple table à lecture directe, dans laquelle on a enregistré les coordonnées de points de la fonction $y = 2^x$ ou un microprocesseur dont le programme permet de calculer le logarithme de base deux de $M_i$ à partir d'une expression de développement limité classique. Les valeurs de Log $M_i$ sont ensuite soumises à un additionneur SOM qui les additionne avec un gain 1/p et retranche le résultat de cette opération de la valeur N/p prédéterminée. Le dispositif SOM engendre donc le terme $\sigma$. On dispose alors de toutes les informations permettant de procéder à la requantification des sous-bandes. L'ensemble des dispositifs Em, LOG et SOM sert donc à engendrer des paramètres nécessaires à la requantification des échantillons du signal vocal. On a donc attribué à l'ensemble générateur de paramètres ainsi constitué, une référence globale PAR. Soit $DQ_i$ le dispositif requantifiant la $i^{ième}$ sous-bande.

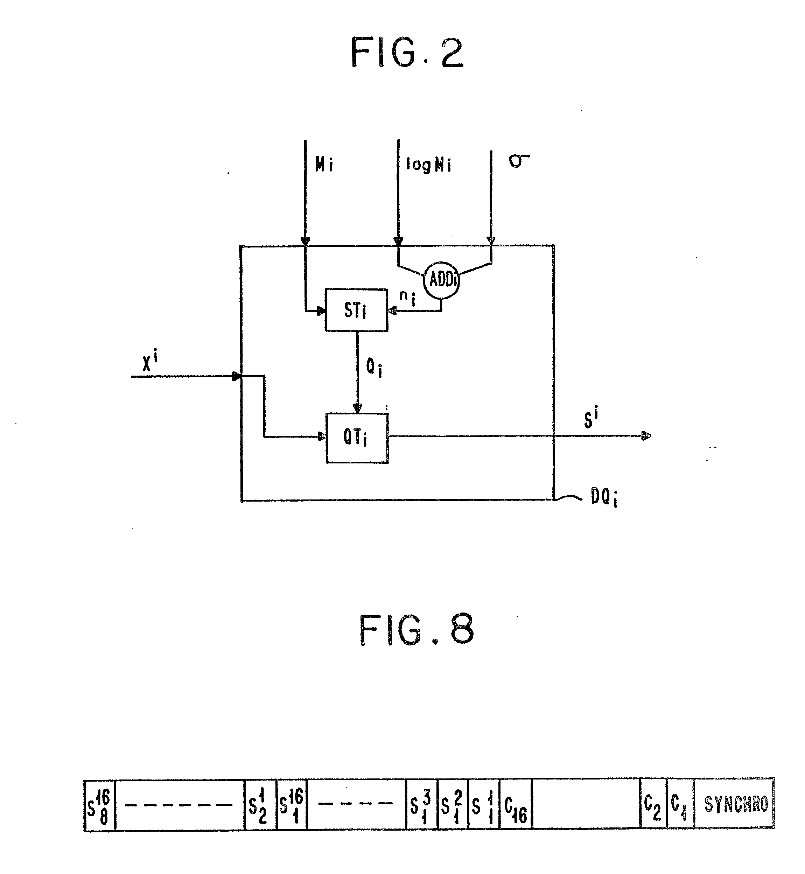

Comme le montre la figure 2, $DQ_i$ comprend: un additionneur $ADD_i$, un générateur de pas de requantification $ST_i$ et un requantificateur proprement dit $QT_i$. L'opération d'addition en $ADD_i$ de log $M_i$ et de $\sigma$ fournit $n_i$, dont on se sert en $ST_i$ pour engendrer le pas de quantification $Q_i$ en effectuant l'opération:

$$Q_i = \frac{M_i}{2^{n_i-1}}. \qquad (4)$$

L'information $Q_i$ étant fournie au requantificateur $QT_i$, celui-ci requantifie les $X^i$ avec le taux de bits $n_i$, engendrant ainsi une nouvelle séquence numérique $S^i$.

Si l'on suppose, à titre d'exemple que $n_i = 1$, le pas de quantification

$$Q_i = M_i. \qquad (5)$$

Le dispositif $QT_i$, effectue alors une simple détection du signe de $X^i$. Lorsque $X^i \geq 0$, $QT_i$ fournit $S^i = 0$, tandis que lorsque $X^i < 0$, il fournit $X^i = 1$ (on notera que le système travaillant en complément à deux zéro indique par convention le signe positif et »1« le signe négatif).

Ainsi les $X^i$ initialement codés en PCM à seize bits par exemple, se trouvent requantifiés à un bit.

Pour $n_i = 2$, on peut coder quatre niveaux, pour $n_i = 3$, on peut coder huit niveaux et ainsi de suite. Ces codages se font en découpant de manière conventionelle la zone de variation maximum de la sous-bande d'ordre i, définie par $M_i$, en autant de tranches d'amplitudes que de niveaux que l'on peut coder à l'aide du nombre de bits $n_i$ alloués.

L'ensemble des $DQ_i$ est regroupé au sein d'un requantificateur DQ.

Comme on l'a vu plus haut, l'utilisation du procédé décrit ci-dessus requiert l'analyse du contenu des sous-bandes sur un laps de temps prédéterminé. Ce faisant, il semble peu rationnel de changer de $n_i$ et de pas de requantification pour chaque échantillon $X^i$. Par contre, ce procédé semble particulièrement adapté à un codage par blocs d'échantillons du type dit BCPCM que l'on peut résumer comme suit: pour chaque bloc de K échantillons obtenu en découpant le flot d'échantillons à coder en tronçons de durée donnée, on choisit un facteur d'échelle C tel que le plus grand échantillon du bloc ne tombe pas en dehors des limites du codage. Puis on quantifie les K échantillons du bloc. L'ensemble constitué par le facteur d'échelle C ou (caractéristique du bloc) et les K échantillons du bloc, une fois quantifiés, fournit l'information numérique définissant complètement le bloc. Pour plus de précision sur ce type de codage, on pourra se reporter à l'article de A. Croisier relatif à une présentation faite au Séminaire International de Communications Numériques de 1974 à Zurich, sous le titre: »Progress in PCM and delta Modulation: Bloc Companded Coding of Speech Signal«.

Dans le système décrit ici, $n_i$ est défini pour la durée de chaque bloc et pour la $i^{ième}$ sous-bande.

On peut prendre pour $C_i$ (facteur d'échelle de la $i^{ième}$ sous-bande) la valeur de $M_i$ ou une valeur proche de celle-ci, auquel cas, l'expression (3) devient:

$$n_i = \frac{N - \log \prod_{j=1}^{p} C_j}{p} + \log C_i. \qquad (6)$$

Naturellement, lorsque l'on voudra décoder le signal de manière à reconstituer l'information du signal vocal d'origine, on aura besoin non seulement des $S^i$ de chaque canal de sous-bande, mais aussi des $C_i$.

Ce qui précède montre l'un des intérêts majeurs du procédé de codage décrit, à savoir que partant d'un nombre global de bits de codage donné, on utilise lesdits bits de façon optimale et rationnelle en les attribuant dynamiquement à la quantification du signal pris par tronçons, en fonction de besoins spécifiques déterminés à partir des caractéristiques du même signal. En contrepartie, le codeur doit disposer du bloc d'échantillons d'un tronçon de signal avant de procéder à la quantification de ce même tronçon. Autrement dit, le principe même de ce type de codage, par ailleurs extrêmement intéressant, entraîne un retard entre entrée et sortie du codeur.

Plus précisément, supposons que l'on ait prévu de coder un signal vocal S(nt) fourni par une ligne de transmission de type téléphonique, à l'aide d'un système utilisant une décomposition en 16 sous-bandes et tel que le nombre d'échantillons par bloc soit pour chaque canal égal à 8. La bande passante des lignes téléphoniques étant inférieure à 4000 Hz, le signal aura été échantillonné à la fréquence de Nyquist, soit

8 KHz. Le bloc de $16 \times 8 = 128$ échantillons au total représente donc un tronçon de signal de =

$$\frac{128}{8 \times 10^3} = 16 \text{ ms}$$

de durée. Le système introduit donc déjà un retard de 16 ms entre l'arrivée d'un tronçon du signal et le démarrage de son traitement pour requantification en vue d'une transmission optimale sur une ligne de transmission de type numérique. Ce retard peu significatif pour certaines applications peut être extrêmement gênant dans le cadre de communications en temps réel.

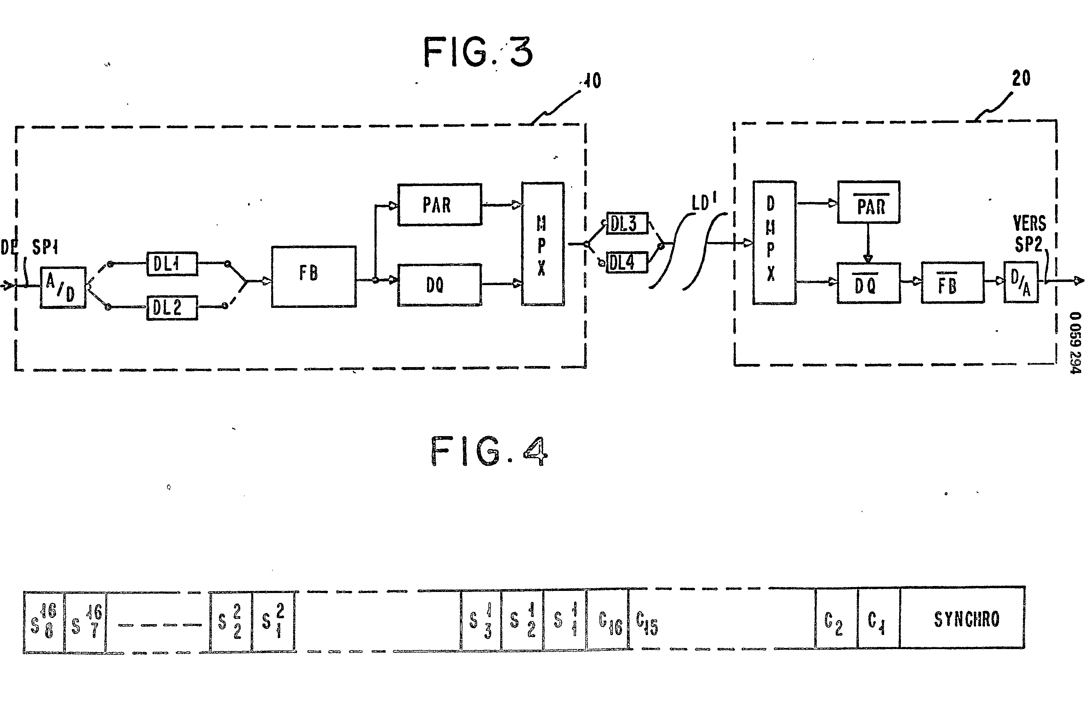

On a représenté sur la figure 3 un schéma montrant de manière plus précise les retards introduits entre un poste émetteur (10) et un poste récepteur (20) placés aux extrémités d'une ligne de transmission numérique lorsque l'on utilise des systèmes du type décrit dans le brevet français FR-A-2 389 277. Le signal d'entrée émis sur une ligne téléphonique par un locuteur SP1 placé à l'entrée du poste émetteur 10 est tout d'abord codé avec un taux de bit élevé à l'aide d'un convertisseru A/D fournissant des échantillons $X_S$. Le flot desdits $X_S$ est scindé en blocs de 16 ms de durée, fournis à l'un des circuits à retard de 16 ms DL1 ou DL2.

Dès que ledit circuit à retard DL1 (ou DL2) choisi est entièrement chargé, le traitement des échantillons qu'il contient peut commencer tandis que la sortie du convertisseur A/D est commutée sur l'autre circuit DL2 (ou DL1). Les échantillons $X_S$ passent dans un banc de filtres FB introduisant lui-même un retard de 2,5 ms. La sortie du banc de filtres est envoyée à la fois au générateur de paramètres PAR et à l'ensemble requantificateur DQ. Le générateur de paramètres PAR incluant les éléments désignés par Em, LOG et SOM de la figure 1, calcule les paramètres destinés à l'ensemble requantificateur DQ.

L'ensemble requantificateur DQ fournit à un multiplexeur MPX, 128 échantillons de signal vocal requantifiés $S^i$ pour chaque tronçon de signal d'origine vocale requantifié, pour l'ensemble des 16 sous-bandes. Quant au générateur de paramètres PAR, il fournit aussi au multiplexeur MPX, 16 facteurs d'échelle $C_i$. Le multiplexeur protège les $C_i$ en leur attribuant un bit de parité et rajoute des bits dits de synchronisation au message finalement transmis sur la ligne de transmission numérique LD1.

On a représenté sur la figure 4 le format d'un groupe des données transmises sur la ligne LD1. Ce format comporte tout d'abord des bits de synchronisation, suivis des 16 valeurs de $C_i$, puis les 128 échantillons de signal vocal requantifies.

En réalité, avant transmettre un groupe de données il faut attendre que les 128 échantillons $S_1^1$ à $S_8^{16}$ soient disponibles. C'est ce que l'on a schématisé par deux lignes à reard DL3 et DL4 de 16 ms chacune et deux commutateurs permettant alternativement de remplir DL3 tandis que le contenu de DL4 est transmis et inversement.

Côté réception (20) des opérations inverses de celles de l'émission sont effectuées. Un démultiplexeur DMPX se sert des bits de synchronisation pour se synchroniser de manière conventionnelle, de façon à pouvoir découper le flot de bits se présentant sur son entrée en groupes de bits tels que celui de la figure 4 et d'en exclure les bits de parité et de synchronisation. Le démultiplexeur DMPX sépare ensuite les $C_i$ des $S_j^i$. Les $C_i$ sont transmis à un générateur inverse de paramètres $\overline{PAR}$, tandis que les $S_j^i$ sont transmis à un ensemble quantificateur inverse $\overline{DQ}$.

Le générateur $\overline{PAR}$ calcule les $n_i$ et $Q_i$ en appliquant les formules (6) et (4) étant entendu que $M_i = C_i$. Quant au quantificateur inverse, il remet les échantillons de signal vocal sous la forme qu'ils avaient à l'entrée de l'ensemble de requantification DQ. Si l'on reprend l'exemple cité plus haut, pour un $M_i = +5$ et $n_i = 1$, DQ aurait fourni $S^i = »0«$ ou $»1«$ (c'est-à-dire $-1$ en complément à deux) selon que l'échantillon $X^i$ soumis à la requantification par DQ aurait eu une valeur supérieure ou inférieure à zéro volt. On peut alors convenir déeffectuer une requantification inverse selon la formule:

$$X^i = (S^i + 0,5) Q_i.$$
D'où pour $\quad S^i = 1, \quad X^i = -2,5$
pour $\quad S^i = 0, \quad X^i = 2,5$

Les informations sortant de $\overline{DQ}$ sont filtrées en $\overline{FB}$ où les p sous-bandes sont recombinées pour couvrir en sortie de $\overline{FB}$ la bande de fréquences du signal vocal d'origine (voir figure 4 du brevet français précité) puis converties en analogique en D/A avant d'être fournies à l'interlocuteur SP2 placé à la sortie de D/A au travers d'une ligne téléphonique notamment. Les filtres $\overline{FB}$ introduisent un retard d'environ 2,5 ms. Par conséquent, déjà entre l'instant où SP1 prononce un son et le moment où son correspondant SP2 reçoit ce même son à l'aide du système de réception qui lui est associé, un délai d'au moins 37 ms s'est écoulé. Ce retard ne serait en soi pas gênant pour SP2. Mais si le signal émis par SP1 et reçu par SP2 retournait à SP1, il y aurait déjà un retard au minimum de 37 ms entre l'instant où le locuteur SP1 émettrait un son et l'instant où il entendrait l'écho de ce même son. Comme on l'a déjà indiqué plus haut, cet écho est alors insupportable à SP1 et toute conversation entre SP1 et SP2 devient impossible.

En pratique, la situation est encore empirée en raison de l'architecture réelle du réseau de communications, notamment lorsque ledit réseau est destiné à fonctionner en duplex total.

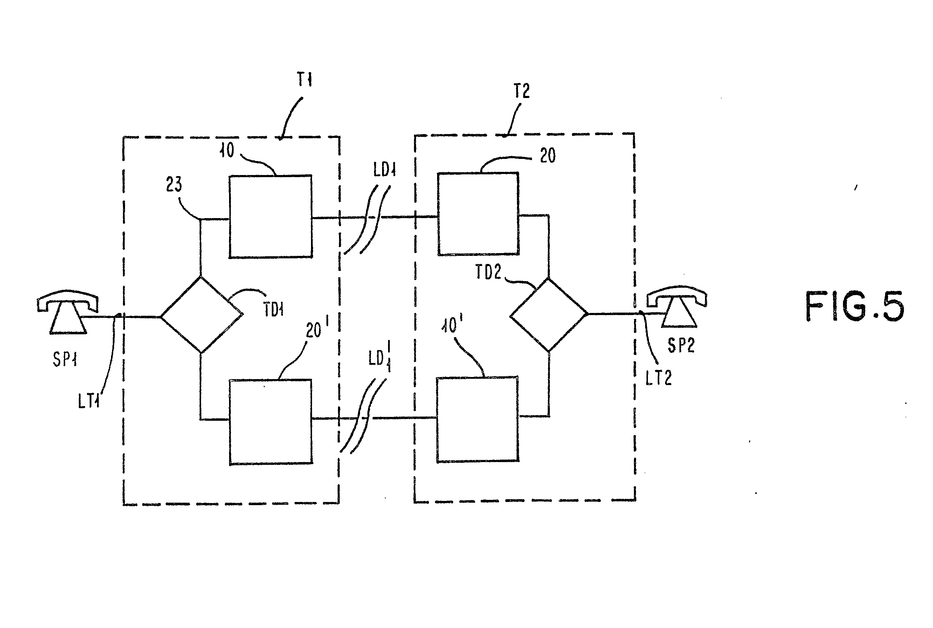

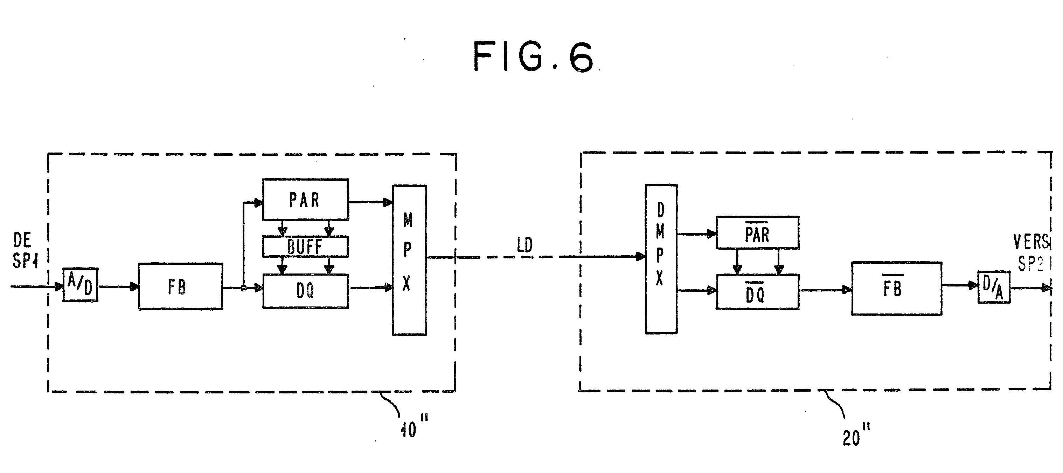

On a représenté de manière schématique sur la figure 5, l'architecture d'un réseau de communications en duplex total dans lequel les interlocuteurs SP1 et SP2 seraient reliés entre eux à la fois au travers de lignes de type dit téléphonique, et au travers de lignes dites de type numérique. Une économie de bits appréciable ou une affectation optimale des bits de codage est obtenue en utilisant des réseaux tels que celui décrit sur la figure 3 pour ce qui est des communications sur les lignes numériques désignées par LD1, LD'1, sur la figure 6. Pour ce qui est de la transmission sur les lignes LT1 et LT2 de type téléphonique, on réalise une économie appréciable de fils téléphoniques en utilisant un système à transformateurs différentiels TD1, TD2, de type classique. Plus précisément, les transformateurs différentiels TD1, TD2, permettent de relier les postes téléphoniques appartenant aux locuteurs SP1 et SP2 et connectés à des lignes téléphoniques LT1 et LT2, à deux fils à travers des stations Emission/Réception T1 et T2 de type numérique connectées entre elles par des lignes de type numérique LD1 et LD'1. Le transformateur TD1 sépare les voies Emission et Réception de SP1. La voie émission (23) passe par un poste émetteur numérique de type 10 transmettant sur la ligne de transmission numérique LD1. A l'autre extrémité de LD1 se trouve un poste récepteur numérique de type 20. L'ensemble émetteur 10, ligne LD1 et récepteur 20 assurant la transmission de TD1 vers TD2 est en tous points semblable à celui représenté sur la figure 3. Il introduit donc un retard d'au moins 37 ms entre les transformateurs différentiels TD1 et TD2. Un ensemble émetteur 10', ligne de transmission numérique LD'1 et récepteur 20', en tous points semblable à l'ensemble 10, LD1 et 20, assure la liaison de TD2 vers TD1. En principe un transformateur différentiel assure une bonne séparation entre les voies émission et réception qui s'y rattachent à condition d'être bien équilibré. En pratique, compte tenu de l'impossibilité de procéder à un équilibrage parfait, impossibilité découlant de la connaissance imparfaite des impédances des lignes LT1 et LT2' une partie du signal de la voie émission du transformateur différentiel est réinjectée dans la voie réception. Il en découle un phénomène d'écho. L'écho affectant le locuteur SP1 et imputable à TD1 est parfaitement négligeable.

En effet, le temps aller-retour du signal émis par SP1 et renvoyé par TD1 est faible. L'écho particulièrement gênant est celui dû au transformateur différentiel TD2. Si l'on retient les valeurs de retards citées à l'occasion de la description de la figure 3, il en découle que l'écho dû à TD2 présente un retard $2 \times 37 = 74$ ms. Autrement dit, les sons émis par le locuteur SP1 lui reviennent au bout de 74 ms au moins et ce, avec un niveau suffisant pour l'empêcher de converser de manière intelligible.

La figure 6 montre un schéma de réalisation d'un perfectionnement du dispositif Emission/Réception de la figure 3. On utilise des éléments de systèmes de codage et de décodage du type décrit dans le brevet français FR-A-2 389 277 mais selon une architecture différente, laquelle va faire apparaître la fonction du dispositif BUFF indiqué en pointillés sur la figure 1, dispositif qui combiné à un procédé de traitement adéquat des signaux requantifiés aura un rôle déterminant dans la résolution du problème d'écho. L'instant entre lequel le son à coder se présente à l'entrée du codeur et celui où ce même son sort du codeur est réduit de manière considérable et suffisante pour neutraliser les effets gênants des phénomènes dits d'écho. Ce schéma de la figure 6 utilise des éléments semblables à ceux représentés sur la figure 3 et auxquels on a donc affecté les mêmes références (FB, PAR, DQ, etc.). Le signal émis par le locuteur SP1 est toujours converti en numérique à taux de bits élevé à l'aide du convertisseur A/D. La sortie du convertisseur A/D fournit les échantillons désignés par $X_S$. Ces échantillons passent, pratiquement sans retard, dans un banc de filtre FB scindant le signal entre $P = 16$ sous-bandes dont l'ensemble couvre une gamme de fréquences basses inférieures à 4000 Hz. A la sortie desdits filtres, on scinde les flots d'échantillons en blocs de 16 ms de durée.

L'ensemble des échantillons d'un bloc donné apparaissant sur l'ensemble des 16 sous-bandes, soit 128 échantillons, est traité par le dispositif PAR qui en déduit les paramètres à utiliser par les quantificateurs $DQ_i$ à $DQ_p$ inclus dans l'ensemble quantificateur DQ. Le dispositif PAR calcule notamment les termes fournis par les dispositifs Em, LOG et SOM, mentionnés plus haut. Les paramètres de requantification déterminés par PAR à partir d'un bloc d'ordre k du le flot d'échantillons à requantifier sont stockés dans le registre BUFF pour être utilisés à la quantification du bloc d'échantillon suivant, c'est-à-dire celui d'ordre $(k+1)$. Ainsi, lorsque le bloc d'échantillons d'ordre $(k+1)$ sort du banc de filtres FB, il peut être requantifié immédiatement en DQ et transmis en même temps que les paramètres $C_i = M_i$ correspondants aux bloc d'ordre k sur la ligne de transmission numérique par l'intermédiaire du multiplexeur MPX. Ce multiplexeur MPX ajoute à chaque groupe de données incluant les bits relatifs aux échantillons du signal requantifiés sur l'ensemble des p sous-bandes et ceux relatifs aux $C_i$, des bits de parité et de synchronisation conventionnels. Durant ces opérations de requantification et transmission, ce même bloc d'échantillons d'ordre $(k+1)$ est pris en charge et traité par PAR en vue du calcul des paramètres que l'on utilisera pour la quantification du bloc d'échantillons suivant, c'est-à-dire celui d'ordre $(k+2)$. Le processus se poursuit ainsi, ce qui revient à dire que si l'on néglige le premier bloc d'échantillons du signal vocal s'étalant sur 16 ms, tout se passe comme si la requantification se faisait quasi instantanément (mis à part les 2,5 ms imputables au filtre FB). Cette élimination d'un retard de 36 ms introduit par le dispositif du brevet français précité FR-A-2 389 277 est donc obtenu grâce à l'introduction d'une avance apparente de 16 ms entre la détermination dynamiques des paramètres de requantification d'un bloc donné d'échantillons à requantifier et l'apparition à l'entrée du codeur des échantillons à traiter à l'aide de ces mêmes paramètres.

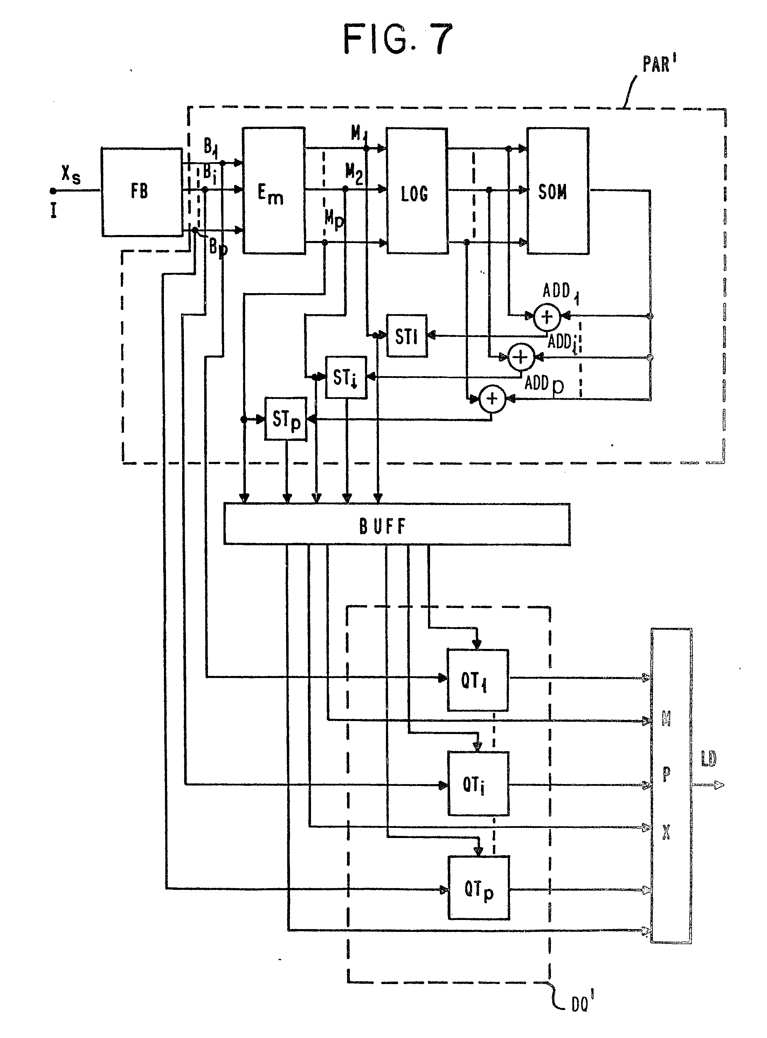

La figure 7 montre une variante du dispositif de la figure 1. Le montage représenté sur la figure 7 est dérivé de celui de la figure 1 par déplacement en amont du registre BUFF des éléments de circuits $ADD_1$, $ADD_2$, ..., $ADD_i$, ..., $ADD_p$ et $ST_1$, $ST_2$, ..., $ST_i$, ..., $ST_p$ initialement inclus dans les circuits $DQ_1$, $DQ_2$, ..., $DQ_i$, ..., $DQ_p$. Ce faisant, le registre BUFF sert à stocker les paramètres $M_1$, $M_2$, ..., $M_i$, ..., $M_p$ et $Q_1$, $Q_2$, ..., $Q_i$, ..., $Q_p$ obtenus à partir d'un bloc donné d'échantillons du signal vocal et destinés au traitement du bloc suivant d'échantillons du signal vocal. Le nouvel ensemble générateur de paramètres de requantification est désigné par PAR'. Le requantificateur DQ' ne regroupe alors plus que les différents dispositifs requantificateurs de sous-bandes proprement dits, à savoir $QT_1$, $QT_2$, ..., $QT_i$, ..., $QT_p$.

En outre, le second retard de 16 ms dû au fait qu'il fallait attendre que les 128 échantillons $S_1^1$ à $S_8^{16}$ requantifiés soient disponibles avant de pouvoir commencer à requantifier et transmettre sur la ligne numérique LD1 le bloc de données auquel ils appartiennent, peut lui aussi être supprimé grâce à la nouvelle architecture de système proposée ici. En effet, la requantification d'un bloc donné peut se faire au fur et à mesure que les échantillons de signal se présentent à la sortie du banc de filtres FB. Comme le montre le schéma de la figure 4 du brevet français précité FR-A-2 389 277 on peut réaliser le banc de filtres FB selon une structure de type dit en arbre. Dans ces conditions, les échantillons des différentes sous-bandes se présentent simultanement. Autrement dit, si l'on désigne par $t_1$, $t_2$, ..., $t_8$, les instants auxquels les échantillons de signal appartenant à un même bloc apparaissent en sortie du banc de filtre FB, l'ensemble des 128 échantillons dudit bloc se présente selon le schéma du tableau ci-dessous.

| $t_8$ | ... | $t_3$ | $t_2$ | $t_1$ |
|---|---|---|---|---|
| $X_8^1$ | ... | $X_3^1$ | $X_2^1$ | $X_1^1$ |
| $X_8^2$ | ... | $X_3^2$ | $X_2^2$ | $X_1^2$ |
| . | | | | |
| . | | | | |
| . | | | | |
| $X_8^{16}$ | ... | $X_3^{16}$ | $X_2^{16}$ | $X_1^{16}$ |

Or les paramètres nécessaires à la requantification des échantillons de signal représentés sur le tableau ci-dessus sont disponibles dans le registre BUFF avant même que lesdits échantillons n'apparaissent à l'entrée du requantificateur DQ. Par conséquent, la requantification peut démarrer dès l'instant $t_0$, instant à partir duquel le requantificateur DQ traitera simultanément:

$$X_1^1, X_1^2, X_1^3, X_1^4, ..., X_1^{15}, X_1^{16}.$$

A l'instant $t_1$, la requantification passera au groupe d'échantillons $X_2^1$, $X_2^2$, . . ., $X_2^{16}$ et ainsi de suite. Le format des bits transmis sur la ligne de transmission numérique LD par le multiplexeur MPX est alors celui de la figure 8.

Ce que faisant, la seconde source de retard de 16 ms citée à propos de la description de la figure 3 (voir DL3 et DL4) est, grâce à la nouvelle architecture de codeur proposée ici, réduite à $16/8 = 2$ ms.

Par conséquent, l'écho imputable au transformateur différentiel TD2 et affectant le locuteur SP1 (voir le système de communication de la figure 5) est ramené à

$$(2,5 \times 2 + 2) \times 2 = 14\,\text{ms}.$$

Cet écho est peu perturbant pour le locuteur SP1.

Vu la symétrie du système de communication de la figure 5, le locuteur SP2 se trouve placé dans les mêmes conditions que SP1 et l'écho qui lui revient du transformateur différentiel TD3 a lui aussi un retard de 18 ms. Il peut lui aussi être négligé.

Bien que l'on ait décrit dans ce qui précède et représenté un mode de réalisation préféré de l'invention, il est évident que l'homme de l'art peut y apporter de nombreuses modifications sans pour autant sortir du cadre de l'invention.

## Revendications

1. Procédé de transmission d'un signal d'origine vocale dont le spectre s'étend sur une bande de fréquences donnée, ledit procédé comportant à l'émission les étapes suivantes:

échantillonnage dudit signal d'origine vocale;
codage en numérique à taux de bits relativement élevé du flot des échantillons ainsi obtenus;
filtrage du signal codé en numérique par répartition de la bande de fréquences donnée en p sous-bandes;
scission du flot d'échantillons du signal filtré et réparti entre p sous-bandes en blocs de durée donnée d'échantillons consécutifs;
requantification de chacun desdits blocs pris successivement, ladite requantification comportant une allocation dynamique du taux de bits alloués à la requantification du signal d'origine vocale de chacune desdites sous-bandes, et comportant pour le traitement de chacun des blocs à requantifier les opérations suivantes:
— détermination pour chaque sous-bande à partir de l'énergie du signal vocal compris dans ladite sous-bande et dérivant du filtrage et de la scission d'un bloc d'échantillons donné, de paramètres dits de requantification de ladite sous-bande;
— requantification des échantillons contenus dans chaque sous-bande et dérivant dudit bloc d'échantillons donné, à l'aide des paramètres de requantification, ladite requantification étant caractérisé en ce que:

la requantification des échantillons contenus dans chaque sous-bande et dérivant dudit bloc d'échantillons donné, est effectuée à l'aide des paramètres de requantification déterminés à partir du bloc d'échantillons précédent de la même sous-bande; et transmission par multiplexage des échantillons de signal requantifiés apparaissant sur les p sous-bandes, accompagnés, pour chaque bloc d'échantillons de paramètres de requantification.

2. Procédé de transmission selon la revendication 1 caractérisé en outre en ce que ladite requantification comporte pour chaque bloc:

a) détermination de l'amplitude M de l'échantillon le plus grand contenu dans chacune desdites sous-bandes pour le bloc considéré;
b) détermination d'un pas de requantification pour chaque sous-bande, pas obéissant à la relation:

$$Q_i = \frac{M_i}{2^{n_i-1}}$$

où:

$$n_i = 1/p \left[ N - \log \prod_{j=1}^{p} M_j \right] + \log M_i$$

$i = 1, 2, 3, \ldots, p$ indique l'ordre de la sous-bande considérée de l'ensemble des p sous-bandes,
$n_i$ est le taux de bits de requantification associé à ladite sous-bande d'ordre i,

$$N = \sum_{i=1}^{p} n_i$$

le nombre de bits total à allouer à la requantification de l'ensemble des p sous-bandes;
$M_i$ est la valeur de l'amplitude de l'échantillon le plus grand pour la sous-bande d'ordre i et pour le bloc considéré;
c) requantification des échantillons contenus dans chaque sous-bande et provenant du filtrage dudit bloc considéré, en utilisant le pas de requantification déterminé pour ladite sous-bande à l'aide des échantillons appartenant au bloc précédent; et

transmission par multiplexage des échantillons requantifiés apparaissant sur les p sous-bandes, accompagnés, pour chaque bloc d'échantillons, de paramètres de requantification.

3. Procédé selon la revendication 2 caractérisé en ce que lesdits paramètres transmis par multiplexage avec chaque bloc d'échantillons traduisent la valeur de l'échantillon d'amplitude la plus élevée apparaissant sur chacune des sous-bandes à l'intérieur d'un bloc d'échantillons donné.

4. Procédé de transmission d'un signal d'origine vocale dont le spectre s'étend sur une bande de fréquences donnée, et destiné à être utilisé pour la réception des informations émises selon la revendication 1, 2 ou 3, ledit procédé étant caractérisé en ce qu'il comporte les étapes suivantes:

démultiplexage des informations reçues en provenance de l'émission, ledit démultiplexage opérant une scission du flot de bits reçu en blocs de bits de durée donnée et pour chacun desdits blocs de durée donnée opérant une séparation des bits s'échantillons de signal vocal requantifiés, des paramètres inclus dans le même dit bloc de durée donnée;
quantification inverse des échantillons de signal vocal de chacun desdits blocs à partir des échantillons de signal vocal et des paramètres en provenance du même bloc issu du démultiplexage;
filtrage des échantillons de signal vocal quantifié inverse, à l'aide d'un filtre recomposant ladite bande de fréquences donnée à partir des p sous-bandes; et
conversion en analogique du signal issu dudit filtrage.

5. Dispositif d'émission pour la mise en œuvre du procédé selon la revendication 1 ou 2 caractérisé en ce qu'il comporte à l'émission:

des moyens (A/D) d'échantillonnage et de codage dudit signal d'origine vocale, en numérique à taux de bits relativement élevé;
des moyens (FB) de scission reliés auxdits moyens d'échantillonnage et de codage et scindant le flot d'échantillons du signal vocal codé en numérique en blocs de durée donnée;
des moyens (FB) de filtrage reliés auxdits moyens de scission et répartissant le spectre du signal d'origine vocale entre p sous-bandes;
des moyens de requantification reliés auxdits moyens de filtrage et comportant:

    des moyens (Em) de mesure d'énergie reliés auxdits moyens de filtrage;
    des moyens (LOG) générateurs de logarithme de base deux reliés auxdits moyens de mesure d'énergie;
    des moyens (SOM) additionneurs reliés auxdits moyens générateurs de logarithme;
    des moyens (BUFF) de stockage reliés auxdits moyens de mesure d'énergie, auxdits moyens générateurs de logarithme et auxdits moyens additionneurs et destinés à stocker des données destinées à permettre la détermination de paramètres de requantification d'un bloc de durée donnée d'échantillons;
    un ensemble (DQ) requantificateur relié auxdits moyens de stockage et auxdits moyens de filtrage et destiné à opérer la requantification des échantillons apparaissant sur chacune desdites sous-bandes issues desdits moyens de filtrage et résultant du filtrage d'un bloc d'échantillons donné, à l'aide des paramètres fournis par les données issues desdits moyens de stockage et déterminés à partir du bloc de données précédent; et

des moyens (MPX) de multiplexage reliés audit ensemble requantificateur et auxdits moyens de filtrage, et destinés à multiplexer les blocs d'échantillons requantifiés accompagnés de paramètres de requantification sur ladite ligne de transmission numérique.

6. Dispositif d'émission pour la mise en œuvre du procédé selon la revendication 2 caractérisé en ce qu'il comporte:

des moyens (A/D) d'échantillonnage dudit signal d'origine vocale et de codage en numérique des échantillons obtenus;
des moyens (FB) de filtrage en arbre reliés auxdits moyens d'échantillonnage et répartissant ledit spectre entre p sous-bandes;
des moyens de scission (FB) scindant le flot d'échantillons en blocs de durée donnée;
des moyens (Em) de mesure d'amplitude de l'échantillon le plus grand M apparaissant dans chaque sous-bande au sein d'un même bloc d'échantillons; lesdits moyens de mesure étant reliés aux moyens de filtrage;
des moyens (LOG) de calcul de logarithme reliés auxdits moyens de mesure d'énergie et calculant le logarithme de base deux des échantillons M de chaque sous-bande pour chaque bloc d'échantillons considéré;
des premiers moyens (SOM) additionneurs reliés auxdits moyens de calcul de logarithme et effectuant les opérations:

$$1/p \left[ N - \sum_{i=1}^{p} \log M_i \right]$$

où
N  est une valeur prédéterminée indiquant un nombre total de bits de requantification à distribuer entre les p sous-bandes;
$i = 1, 2, \ldots, p$ définissant l'ordre de la sous-bande considérée à la sortie desdits moyens de filtrage;

des seconds moyens additionneurs (ADD$_i$)reliés aux sorties desdits moyens de calcul et desdits premiers moyens additionneurs;
des moyens (ST$_i$) générateurs de pas de quantification reliés auxdits seconds moyens additionneurs et auxdits moyens de mesure d'amplitude;
des moyens (BUFF) de stockage reliés auxdits moyens de mesure d'amplitude et auxdits moyens générateurs de pas de quantification;
des dispositifs (QT$_i$, ..., QT$_p$) requantificateurs de sous-bandes reliés auxdits moyens de stockage et auxdits moyens de filtrage en arbre; et
des moyens de multiplexage reliés auxdits moyens requantificateurs de sous-bandes et auxdits moyens de stockage.

## Patentansprüche

1. Verfahren für die Übertragung eines Signals vokalen Ursprungs, dessen Spektrum sich über einen gegebenen Frequenzbereich erstreckt, wobei das Verfahren bei der Sendung die folgenden Stufen enthält:

Zerstückelung des besagten Signals vokalen Ursprungs;
Umwandlung in digitale Größen mit verhältnismäßig hohem Bit-Grad des dadurch erhaltenen Signalflusses;
Filtrierung des digital kodierten Signals durch Aufteilung des gegebenen Frequenzbereiches in p Unterbereiche;
Teilung des Signalflusses des gefilterten und in p Unterbereiche aufgeteilten Signals in Blöcke einer gegebenen Dauer der aufeinanderfolgenden Teilsignale;
erneute Quantifizierung eines jeden der besagten Blöcke nacheinander, mit dynamischer Zuordnung des der Neuquantifizierung des Signals vokalen Ursprungs eines jeden der genannten Unterbereiche zugeordneten Bit-Grades, wobei für die Verarbeitung eines jeden der neu zu quantifizierenden Blöcke folgende Vorgänge anfallen:

— Ermittlung sogenannter Neuquantifizierungsparameter des besagten Bandbereiches für jeden Unterbereich, ausgehend von der Energie des im besagten Unterbereich enthaltenen vokalen Signals am Ausgang der Filterung und der Spaltung eines gegebenen Teilsignalblocks;
— Neuquantifizierung der in jedem Unterbereich enthaltenen Teilsignale, die vom besagten Teilsignalblock abgeleitet sind, mit Hilfe von Neuquantifizierungsparametern, wobei die Neuquantifizierung dadurch gekennzeichnet ist, daß

die Neuquantifizierung der in jedem Unterbereich enthaltenen Teilsignale, abgeleitet vom besagten Teilsignalblock, mit Hilfe von Neuquantifierungsparametern vorgenommen wird, welche ausgehend vom vorangehenden Teilsignalblock des gleichen Unterbereiches ermittelt werden, und dadurch, daß
die Übertragung durch Multiplexierung der neuquantifizierten Teilsignale, die auf den p Unterbereichen erscheinen, für jeden Teilsignalblock zusammen mit den Neuquantifizierungsparametern erfolgt.

2. Verfahren der Übertragung gemäß Anspruch 1, ferner dadurch gekennzeichnet, daß die besagte Neuquantifizierung für jeden Block enthält:

a) Bestimmung der Amplitude M des größten Signals, das in jedem der besagten Unterbereiche für den jeweiligen Block enthalten ist;

b) Bestimmung eines Neuquantifizierungsschrittes für jeden Unterbereich, der folgender Beziehung entspricht:

$$Q_i = \frac{M_i}{2^{n_i-1}}$$

mit:

$$n_i = 1/p \left[ N - \log \prod_{j=1}^{p} M_j \right] + \log M_i$$

$i = 1, 2, 3, \ldots, p$ gibt die Reihenfolge des jeweiligen Unterbereiches aus der Menge der p Unterbereiche an,
$n_i$ ist der Bit-Grad der Neuquantifizierung, der dem besagten Unterbereich der Stelle i zugeordnet ist,

$$N = \sum_{i=1}^{p} n_i$$

Gesamtzahl der Bits, die der Neuquantifizierung der Menge der p Unterbereiche zuzuordnen ist;
$M_i$ ist der Wert der Amplitude des größten Signals für den Unterbereich der Stelle i und für den jeweiligen Block;

c) Neuquantifizierung der in jedem Unterbereich enthaltenen Signale nach Filterung des jeweiligen Blocks unter Verwendung des Neuquantifizierungsschrittes, der für den besagten Unterbereich mit Hilfe der Teilsignale des vorangehenden Blockes ermittelt wurde; und Übertragung durch Multiplexierung der neuquantifizierten Teilsignale, die auf den p Unterbereichen auftreten, mit den Neuquantifizierungsparametern für jeden Teilsignalblock.

3. Verfahren gemäß Anspruch 2, dadurch gekennzeichnet, daß die besagten Parameter, die durch Multiplexierung mit jedem Teilsignalblock übertragen werden, den Wert des Teilsignals der höchsten Amplitude wiedergeben, die in jedem der Unterbereiche innerhalb eines gegebenen Teilsignalblocks auftritt.

4. Verfahren der Übertragung eines Signals vokalen Ursprungs, dessen Spektrum sich über einen gegebenen Frequenzbereich erstreckt, für den Empfang der gemäß Anspruch 1, 2 oder 3 ausgesandten Informationen bestimmt, und dadurch gekennzeichnet, daß es folgende Schritte enthält:

Demultiplexierung der vom Empfang erhaltenen Informationen, durch Aufspaltung des empfangenen Bit-Flusses in Bit-Blöcke vorgegebener Dauer und für jeden der besagten Blöcke vorgegebener Dauer Trennung der neuquantifizierten Teilsignal-Bits des vokalen Signals von den im gleichen besagten Block vorgegebener Dauer enthaltenen Parametern;

umgekehrte Quantifizierung der Teile des vokalen Signals eines jeden der besagten Blöcke, ausgehend von den Teilen des vokalen Signals und den Parametern des gleichen Blocks, der aus der Demultiplexierung hervorgegangen ist;
Filterung der Teile des umgekehrt quantifizierten vokalen Signals mit Hilfe eines Filters, welcher den besagten gegebenen Frequenzbereich ausgehend von den p Unterbereichen wieder vereint; und
Umwandlung des aus der besagten Filterung hervorgegangenen Signals in ein Analogsignal.

5. Sendevorrichtung für den Einsatz des Verfahrens gemäß Anspruch 1 oder 2, dadurch gekennzeichnet, daß sie bei der Sendung enthält:

Mittel (A/D) für die Zerstückelung und Kodierung des besagten Signals vokalen Ursprungs in ein digitales Signal mit verhältnismäßig hohem Bit-Grad;
Mittel (FB) für die Zerspaltung im Zusammenhang mit den besagten Teilungs- und Kodierungsmitteln, wodurch der Fluß der Teile des vokalen Signals in Digitalkodierung in Blöcke vorgegebener Dauer aufgeteilt wird;
Mittel (FB) für die Filterung, verbunden mit den besagten Teilungsmitteln, für Aufteilung des Spektrums des Signals vokalen Ursprungs in p Unterbereiche;
Mittel für die Neuquantifizierung in Verbindung mit den besagten Filtermitteln, mit:

Mitteln (Em) für die Energiemessung, verbunden mit den besagten Filtermitteln;
Mitteln (LOG) für die Erzeugung des Logarithmus der Basis zwei in Verbindung mit den besagten Energiemessungsmitteln;
Addiermitteln (SOM), verbunden mit den besagten Logarithmusgeneriermitteln;
Mitteln (BUFF) für die Speicherung in Verbindung mit den besagten Energiemeßmitteln, mit den besagten Logarithmusgeneriermitteln und mit den besagten Additioniermitteln, bestimmt für die Speicherung der Daten, die die Ermittlung der Neuquantifizierungsparameter eines Teilblocks gegebener Dauer gestatten sollen;
einer Einheit (DQ) für die Neuquantifizierung in Verbindung mit den besagten Speichermitteln und mit den besagten Filtermitteln, dafür bestimmt, die Neuquantifizierung der Teilsignale vorzunehmen, die auf jedem der besagten Unterbereiche auftreten, am Ausgang der besagten Filtriermittel, als Ergebnis der Filterung eines gegebenen Teilsignalblocks mit Hilfe der Parameter, welche von den Daten aus den besagten Speichermitteln geliefert und vom vorangehenden Datenblock aus bestimmt werden; und

Multiplexiermittel (MPX), verbunden mit der besagten Einheit für die Neuquantifizierung und mit den besagten Filtriermitteln, dafür bestimmt, die neuquantifizierten Teilblöcke zu multiplexieren, zusammen mit den Neuquantifizierungsparametern auf der besagten digitalen Übertragungsleitung.

6. Sendevorrichtung für den Einsatz des Verfahrens gemäß Anspruch 2, dadurch gekennzeichnet, daß sie enthält:

Mittel (A/D) für die Zerstückelung des besagten Signals vokalen Ursprungs und die digitale Kodierung der erhaltenen Teilsignale;
Mittel (FB) für die Filtrierung in Baumkonfiguration in Verbindung mit den besagten Zerstückelungsmitteln und Aufteilungsmitteln des besagten Spektrums in p Unterbereiche;
Mittel für die Aufspaltung (FB) des Teilsignalflusses in Blöcke vorgegebener Dauer;
Mittel (Em) für die Messung der Amplitude des größten Teilsignals M in jedem Unterbereich innerhalb eines gleichen Teilsignalblocks, verbunden mit den Filtriermitteln;
Mittel (LOG) für die Berechnung des Logarithmus, verbunden mit den besagten Energiemeßmitteln und für die Berechnung des Logarithmus auf Basis zwei der Teilsignale M eines jeden Unterbereiches für jeden anfallenden Teilsignalblock;
erste Addiermittel (SOM) in Verbindung mit den besagten Logarithmusberechnungsmitteln für die Ausführung der Rechenvorgänge:

$$ 1/p \left[ N - \sum_{i=1}^{p} \log M_i \right] $$

N   ist hier ein vorgegebener Wert, der eine Gesamtzahl der Neuquantifizierungsbits angibt, aufzuteilen auf die p Unterbereiche;
$i = 1, 2, \ldots, p$ legt die Reihenfolge des jeweiligen Unterbereiches am Ausgang der besagten Filtriermittel fest;

zweite Addiermittel ($ADD_i$), verbunden mit den Ausgängen der besagten Rechenmittel und der besagten ersten Addiermittel;
Mittel ($ST_i$) für die Generierung von Quantifizierungsschritten, verbunden mit den besagten zweiten Addiermitteln und mit den besagten Amplitudenmeßmitteln;
Mittel (BUFF) für die Speicherung, verbunden mit den besagten Amplitudenmeßmitteln und mit den besagten Generiermitteln der Quantifizierungsschritte;
Vorrichtungen ($QT_i, \ldots, QT_p$) für die Neuquantifizierung der Unterbereiche, verbunden mit den besagten Speichermitteln und mit den besagten Filtriermitteln in Baumkonfiguration; und
Multiplexiermittel, verbunden mit den besagten Neuquantifiziermitteln der Unterbereiche und mit den besagten Speichermitteln.

## Claims

1. A transmission process for transmitting a voice originated signal the spectrum of which extends within a given frequency band, said process including at the transmission side, the following steps:

sampling said voice-originated signal;
digitally coding the so-obtained sample stream with a relatively high bit rate;
filtering the digitally-coded signal by partitioning the given frequence band into p sub-bands;
splitting the sample stream of the p sub-band-partitioned and filtered signal into consecutive blocks of samples of a given time duration;
sequentially requantizing each of said blocks, said requantizing including a dynamical allocation of the bit rate allocated to the requantizing of the voice originated signal of each of said sub-bands, and including for the processing of each of the blocks to be requantized, the following operations:

determining so-called requantizing parameters of said sub-band, for each of said sub-bands, from the energy of the voice originated signal being within said sub-band and derived from the filtering and splitting operation of a given block of samples;
requantizing the samples contained in each sub-band and derived from said given block of samples, using requantizing parameters said requantizing operation being characterized in that:

requantizing the samples contained in each sub-band and derived from said given block of samples, is carried out by means of the requantizing parameters determined from the previous block of samples in the same sub-band, and

multiplex-transmitting the signal requantizing samples over the p sub-bands together with requantizing parameters, for each block of samples.

2. A transmission process according to claim 1 further characterized in that said requantization comprises for each block:

a) determining the amplitude M of the largest sample contained within each of said sub-bands for the considered block;
b) determining a requantizing step for each sub-band, which meets the relation:

$$Q_i = \frac{M_i}{2^{n_i - 1}}$$

where:

$$n_i = 1/p \left[ N - \log \prod_{j=1}^{p} M_j \right] + \log M_i$$

wherein $i = 1, 2, 3, \ldots, p$ is indicative of the order of the considered sub-band over the p sub-band assembly,
$n_i$ is representative of the requantizing bit rate associated with said sub-band of order i,

$$N = \sum_{i=1}^{p} n_i$$

is the total number of the bits to be allocated to the requantization of the p sub-bands;
$M_i$ is the value of the amplitude of the largest sample for the sub-band of order i and for the considered block;

c) requantizing the samples of each sub-band which samples are derived from the filtering of said considered block, by using the requantizing step determined for said sub-band through a processing of the samples belonging to the preceding block;
and multiplex-transmitting the requantized samples appearing in the p sub-bands, together with requantizing parameters for each sample block.

3. A process according to claim 2, characterized in that said parameters transmitted through a multiplex operation with each block of samples, are indicative of the value of the sample having the highest amplitude in each of the sub-bands within a given block of samples.

4. A communication process for a voice-originated signal the the spectrum of which extends within a given frequency band, and for use in the reception of the elements of information transmitted according to claims 1, 2 or 3, said process being characterized in that it includes the following steps:

demultiplexing the received elements of information said demultiplexing splitting the received bit stream into bit blocks of a given time duration, and for each of said blocks of a given time duration, separating teh requantized voice-originated signal sample bits from the parameters included within said block of a given time duration;
inverse quantizing the voice-originated signal samples of each of said blocks, using the voice-originated signal samples and the parameters derived from the demultiplexing of a same block of bits;
filtering the inverse quantized voice-originated signal, using a filter recombining said given frequences band from the p sub-bands; and
analog converting the signal obtained from said filtering operation.

5. A transmission system for the implementation of the process according to claims 1 or 2, characterized in that it includes, on the transmission side:

sampling and coding means (A/D) for sampling and coding said voice-originated signal into a digital signal coded with a relatively high bit rate;

splitting means (FB) connected to said sampling and coding means for splitting the sample stream of the digitally coded voice-originated signal, into blocks of samples of a given time duration;

filtering means (FB) connected to said splitting means and partitioning the voice-originated signal spectrum, into p sub-bands;

requantizing means connected to said filtering means and including:

. energy measuring means (Em) connected to said filtering means;

logarithm generating means (LOG) connected to said energy measuring means;

adding means (SOM) connected to said logarithm generating means;

buffering means (BUFF) connected to said energy measuring means, to said logarithm generating means and to said adding means for buffering data used to determine the requantizing parameters of a block of samples of a given time duration;

a requantizer (DQ) connected to said buffering means and to said filtering means for requantizing samples provided on each of said sub-bands derived from said filtering means and resulting from the filtering of a given block of samples, using the parameters provided by the data provided by said buffering means and determined from the preceding block of samples; and

multiplexing means (mps) connected to said requantizer and to said filtering means, for multiplexing the requantized sample blocks with the requantizing parameters, over said transmission line.

6. A transmission system for the implementation of the process according to claim 2, characterized in that it includes:

sampling means (A/D) for sampling said voice-originated signal and for digitally encoding the so-obtained samples;

tree-shaped filtering means (FB) connected to said sampling means and partitioning said spectrum into p sub-bands;

splitting means (FB) splitting the sample stream into blocks of a given time duration;

amplitude measuring means (Em) for measuring the amplitude of the highest amplitude sample M which appears in each sub-band within a same sample block, said measuring means being connected to said filtering means;

logarithm calculating means (LoG) connected to said energy measuring means and calculating the base-two logarithm of the samples M in each sub-band for each considered sample block;

first adding means (SoM) connected to said logarithm calculating means and effecting the operations:

$$1/p \left[ N - \sum_{i=1}^{p} \log M_i \right]$$

where

N  is a predetermined value indicative of the total number of the requantizing bits to be distributed over the p sub-bands;

i = 1, 2, ..., p defines the order of the considered sub-band at the output of said filtering means;

second adding means (ADDi) connected to the outputs of said logarithm calculating means and said first adding means;

quantizing step generating means (STi) connected to said second adding means and to said amplitude measuring means;

buffering means (BUFF) connected to said amplitude measuring means and to said quantizing step generating means;

sub-band requantizing devices (QTi ... QTp) connected to said buffering means and to said tree-shaped filtering means; and

multiplexing means connected to said sub-band requantizing means and to said buffering means.

FIG. 1

0 059 294

# FIG. 2

# FIG. 8

# FIG. 3

# FIG. 4

FIG.5

# FIG. 6

DE SP1

A/D → FB → PAR, BUFF, DQ → M P X

LD

D M P X → $\overline{PAR}$, $\overline{DQ}$ → $\overline{FB}$ → D/A → VERS SP2

10"  20"

0 059 294

# FIG. 7